# EUROPÄISCHE PATENTSCHRIFT

(11) **EP 0 864 541 B1**
(45) Veröffentlichungstag und Bekanntmachung des Hinweises auf die Patenterteilung: **08.05.2002**
(21) Anmeldenummer: 98102247.8
(22) Anmeldetag: 10.02.1998
(51) Int. Cl.: C02F 3/12, C02F 3/00

(54) **Verfahren zur Steuerung der Phosphorkonzentration in biologischen Abwasserreinigungsanlagen**
Process for controlling phosphate concentration in biological water treatment plants
Procédé de contrôle de la concentration de phosphate dans des stations d'épuration biologique des eaux usées

(30) Priorität: 12.03.1997 DE 19710065
(43) Veröffentlichungstag der Anmeldung: 16.09.1998
(73) Patentinhaber: Ticona GmbH, 65451 Kelsterbach (DE)
(72) Erfinder: Engel, Friedrich, 65510 Idstein (DE)

(56) Entgegenhaltungen:
- PATENT ABSTRACTS OF JAPAN vol. 015, no. 496 (C-0894), 16.Dezember 1991 & JP 03 217297 A (NKK CORP), 25.September 1991,
- ISAACS, S., TEMMINK, H.: "Experiences with automatic N and P measurements of an activated sludge process in a research environment" WATER SCIENCETECHNOLOGY, Bd. 33, Nr. 1, 1996, Seiten 165-173, XP002069450

## Beschreibung

Die Erfindung betrifft ein Verfahren zur Steuerung einer biologischen Abwasserreinigungsanlage, bei dem man das Abwasser in einem Belebungsbecken in Gegenwart eines Belebtschlammes belüftet und zur Beeinflussung der Eigenschaften des Belebtschlammes Phospor konzentrationsgesteuert zugibt.

Phosphor ist nach den bisherigen Erkenntnissen auf dem Gebiet der biologischen Abwasserreinigungsanlagen ein Element, das die Abbauleistung und die Sedimentationseigenschaften des Belebtschlammes mit beeinfluß, und zwar dergestalt, daß sich beide Eigenschaften mit fallender Phosphorkonzentration nachteilig ändern. Nach vorherrschender Meinung soll eine Phosphorkonzentration im Belebtschlamm-Wasser-Gemisch von etwa 1 Gew.% (P) bezogen auf den Biologischen Sauerstoff Bedarf (BSB5) optimal sein, wobei diese optimale Konzentration vom Abwasser und vom Schlamm abhängen kann. Gleichzeitig darf aber die Phosphorkonzentration im Ablauf der Anlage, d.h. nach der Nachklärungsstufe, die der Belebungsstufe nachgeschaltet ist, die behördlich festgelegten Grenzen nicht überschreiten. Deshalb wird nach den bekannten Verfahren die Phosphorkonzentration im Belebungsbecken dergestalt eingestellt, daß man die Phosphorkonzentration im Ablauf der Anlage mißt und diesen Wert zur Steuerung der Phosphorzugabe - gewöhnlich als wäßrige H₃PO₄ -Lösung - heranzieht. Diese Regelung soll gewissermaßen die Phosphorkonzentration im Ablauf konstant halten.
Dieses bekannte Verfahren hat den Nachteil, daß die Phosphorkonzentration im Ablauf sehr stark schwankt, mit der Gefahr daß der behördlich festgesetzte Grenzwert überschritten wird.

Der Erfindung lag daher die Aufgabe zugrunde, das bekannte Verfahren so zu verbessern, daß die Schwankungen zumindest vermindert werden.

Es wurde nun überraschend festgestellt, daß diese Aufgabe dadurch gelöst werden kann, daß man zur Steuerung der Phosphorzugabe die Phosphorkonzentration im Belebtschlamm mißt und die Phosphorzugabe so steuert, daß die Phosphorkonzentration im Belebtschlamm größer gleich einer Untergrenze und kleiner gleich einer Obergrenze ist.
Durch das erfindungsgemäße Verfahren können die Ablaufwerte einer biologischen Abwasserreinigungsanlage optimiert und die von der Behörde vorgegebenen Grenzwerte im Ablauf einer Abwasserreinigungsanlage besser eingehalten werden als bisher.

Gegenstand der Erfindung ist daher ein Verfahren zur Steuerung einer biologischen Abwasserreinigungsanlage, bei dem man das Abwasser in einem Belebungsbecken in Gegenwart eines Belebtschlammes belüftet und zur Beeinflussung der Eigenschaften des Belebtschlammes Phospor konzentrationsgesteuert zugibt, wobei man die Phosphorkonzentration des Schlamm/Wasser-Gemisches im Belebungsbecken mißt und als Maß für die Phosphorkonzentration des Belebtschlammes verwendet, die Messung der Phosphorkonzentration on-line erfolgt und man die Phosphorzugabe so steuert, daß die Phosphorkonzentration im Belebtschlamm größer oder gleich einer Untergrenze von 4 mg P/g TS und kleiner oder gleich einer Obergrenze von 10 mg P/gTS ist.

Eine bevorzugte Ausführungsform ergibt sich aus dem Unteranspruch.

Zur Bestimmung der Phosphorkonzentration kann man zweckmäßigerweise das Verfahren nach DIN 38 405 verwenden. Danach wird die Phosphorkonzentration in einem homogenisierten Belebtschlamm-Wasser-Gemisch ermittelt und davon die im Ablauf gemessene Phosphorkonzentration abgezogen. Dieses Ergebnis wird durch die Trockensubstanzkonzentration (Trockensubstanz (TS) = getrockneter Belebtschlamm) dividiert und liefert als Resultat die Phosphorkonzentration im Belebtschlamm ( P/TS, Gew. P/Gew. TS). In einer bevorzugten Ausführungsform wird die Messung on-line, d.h. kontinuierlich durchgeführt.

Die Erfindung wird durch die nachfolgend beschriebenen Versuche näher erläutert. Eine Beschränkung der Erfindung in irgendeiner Weise ist dadurch nicht beabsichtigt.

Das folgende Beispiel zeigt typische Konzentrationsdaten aus einer industriellen Abwasserreinigungsanlage.

| | | |
|---|---|---|
| Beispiel: | Phosphorkonzentration aus dem homogenisierten Belebtschlamm-Wasser-Gemisch mg/l | 40,5 mg/l |
| | - Phosphorkonzentration aus dem Ablaufwasser mg/l | - 0,5 g/l |
| | : Trockensubstanzgehalt in der Belebung g/l | : 5,0 g/l |
| | = Phosphorkonzentration im der Trockensubstanz (mg P/g TS) | = 8 mgP/gTS |
| | | |
| | (40,5 mg/l - 0,5 g/l) : 5 g/l = 8 mgP/gTS | |

Davon ausgehend war zu prüfen, inwieweit sich der Phosphor im Belebtschlamm aufkonzentrieren läßt, ohne daß er als Überschuß in das Ablaufwasser abgegeben wird. Durch die Zugabe von Phosphor (Phosphorsäure) in das Belebungsbecken wurde der P/TS-Gehalt im Belebtschlamm soweit aufkonzentriert bis eine Sättigungsgrenze von ca. 8 - 10 mg P/TS erreicht war und ein Überschuß von mindestens 0,5 mg/l Pges. im Ablaufwasser nachgewiesen wurde. Anschließend wurde der P/TS-Gehalt durch Unterfütterung, d.h. durch Unterbrechung der Zugabe, soweit abgesenkt, bis im Ablauf nur noch geringe Konzentrationen Pges. (ca. 0,1-0,2 mg/l) nachgewiesen wurden. Es stellte sich heraus, daß nach einer längeren Phase der Unterschreitung von ca. 5 mgP/gTS ein schlechterer CSB-Abbau und unterhalb von ca. 4 mgP/gTS eine schlechtere Sedimentation des Belebtschlammes zu verzeichnen ist.

Dieser Versuch wurde innerhalb von vier Monaten einige Male wiederholt und ist reproduzierbar. Eine Abmagerung des P-Gehaltes unter die Grenze von ca. 4 mgP/gTS führte nach einiger Zeit zu starkem Schlammabtrieb im Ablauf der Anlage. Um die Ablaufwerte der Anlage nicht immer wieder zu gefährden wurde vor Unteroder Überschreitung der Grenzen der Versuch abgebrochen und gegengesteuert.

Aus den Beobachtungen des Anlageverhaltens in den vergangenen Jahren läßt sich schließen, daß für jede biologische Abwasserreinigungsanlage und für jedes Abwasser eine individuelle Ober- und Untergrenze der Phosphorkonzentration im Belebtschlamm existiert, die optimalen biologischen Abbau und günstige Sedimentationseigenschaften des Belebtschlammes gewährleistet, wobei die Grenzen experimentell zu ermitteln sind. Auf diese Weise können die Ablaufwerte optimiert und die von der Behörde vorgegebenen Grenzwerte im Ablauf einer Abwasserreinigungsanlage eingehalten werden.

In der genannten industriellen Abwasserreinigungsanlage wird bei P/TS-Konzentrationen unter ca. 5 mg P/g TS die Phosphorzugabe erhöht, während bei P/TS-Konzentrationen über 8-10 mg P/g TS die Phosphorzugabe reduziert wird. Diese neue Art der Phosphor-Überwachung und Steuerung macht es möglich, eine optimale Sättigung des Belebtschlammes mit Phosphor einzuhalten und kritische Bereiche zu meiden.

Es stellte sich heraus, daß vor allem die P/TS Obergrenzen, aber auch die Untergrenzen keine festen Grenzen sind, sondern je nach Zustand der Biozönose und des zugeführten Abwassers variieren können und für jede Anlage und Abwasser ermittelt werden müssen. Aber selbst bei stark wechselnden Abwässern bleibt immer noch eine Bandbreite von ca. 3 - 5 mg P/gTS in der man sich bewegen kann ohne die kritischen Sättigungsgrenzen zu überschreiten oder zu unterschreiten.

Weiterhin ergaben Versuche, daß es durch den Einsatz eines PO₄-on-line-Meßgerätes (hier von der Fa. STIP; Siepmann und Teutscher in D-64823 Groß Umstadt) am Belebungsbecken möglich ist, das Gerät mit dem Belebtschlamm-Wasser-Gemisch aus der Belebung zu beschicken und so den P-Gehalt im Belebtschlamm on-line zu überwachen. Da der TS-Gehalt im Belebungsbecken in der Regel konstant gehalten wird, kann der P/TS-Wert auch an analysenfreien Tagen gut überwacht werden. Dieser Wert korreliert sehr gut mit den im Labor gefundenen Werten.

In den Tabellen 1 bis 4 und den Diagrammen 1 und 2 sind die Versuchsergebnisse zusammengefaßt und graphisch dargestellt. SV30 bezeichnet darin das relative Schlammvolumen nach 30 min Absetzzeit (Methode nach DIN). Der Index ist der Quotient aus SV30 und TS. BS bezeichnet das Belebtschlamm-Wasser-Gemisch. Die P/TS-Untergrenze läßt sich sehr gut erkennen. Sie wurde daher in den Diagrammen eingezeichnet. Da die P/TS-Obergrenzen stark von der Abwasserzusammensetzung abhängig sind, wurde hier auf eine Darstellung in den Graphen verzichtet.

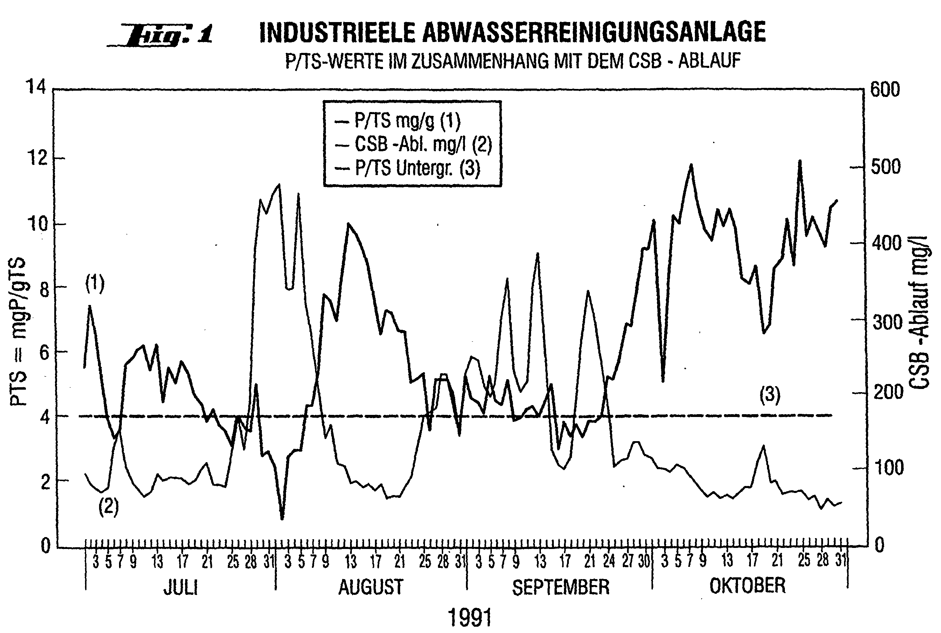

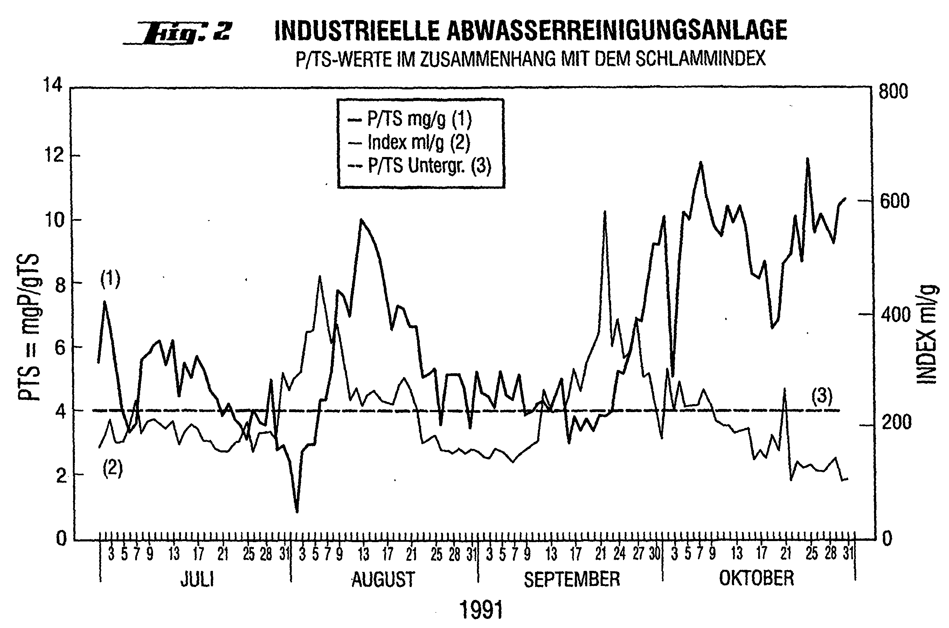

Im Diagramm 1 sind die P/TS-Werte im Zusammenhang mit den CSB-Ablaufwerten (Chemischer Sauerstoffbedarf) dargestellt. Die Ende August Anfang September höheren Ablaufwerte sind auf vorübergehend schlecht abbaubares Abwasser zurückzuführen.

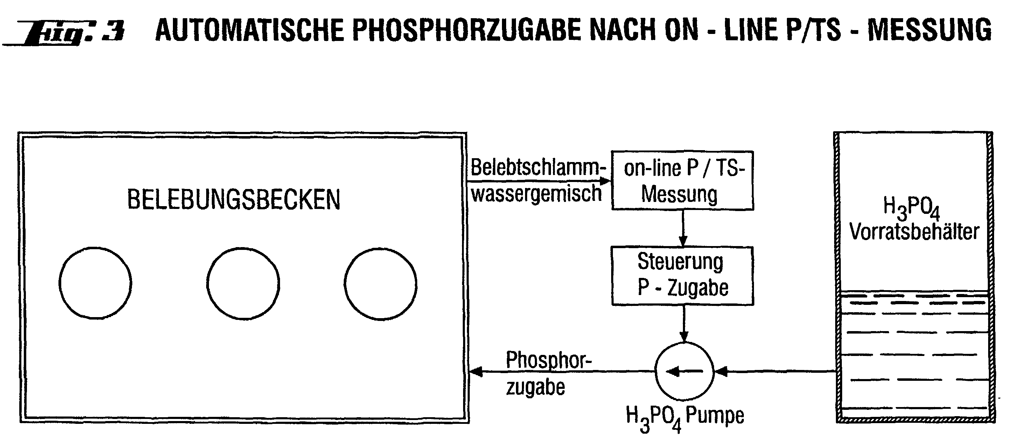

Im Diagramm 2 sind die P/TS-Werte im Zusammenhang mit den Sedimentationseigenschaften des Belebtschlammes, die durch den Schlammindex charakterisiert sind, dargestellt.

In allen dargestellten Beispielen ist eine deutliche Abhängigkeit vom P/TS-Gehalt, den Sedimentationseigenschaften und des CSB-Abbaues zu erkennen. Durch diese Möglichkeit der Phosphorkonzentrationsüberwachung im Belebtschlamm und einer gezielten Phosphorzugabe können die Ablaufkonzentrationen für CSB und Phosphor in Kläranlagen optimiert werden.

Das Fließbild in der Figur zeigt schematisch eine automatisierte Phosphorzugabe.

**Tabelle 1**

| Phosphorbestimmung - Industrielle Abwasserreinigungsanlage | | | | | | | | | |
|---|---|---|---|---|---|---|---|---|---|
| Datum | Belebtschlamm | | | Phosphorkonzentration | | | | | Ablauf |
| 1991 Juli | SV30 ml/l | TS g/l | Index ml/g | BS mg/l | Filtrat mg/l | Differenz mg/l | Ablauf mg/l | P/TS mg/g | CSB mg/l |
| 1 | 450 | 2,8 | 161 | 15,7 | 0,3 | 15,4 | 0,3 | 5,5 | 95 |
| 2 | 400 | 2,2 | 182 | 16,9 | 0,3 | 16,6 | 0,2 | 7,5 | 80 |
| 3 | 600 | 2,8 | 214 | 19,1 | 0,3 | 18,8 | 0,2 | 6,7 | 75 |
| 4 | 540 | 3,2 | 169 | 16,7 | 0,2 | 16,5 | 0,3 | 5,2 | 70 |
| 5 | 550 | 3,2 | 172 | 13,2 | 0,3 | 12,9 | 0,3 | 4,0 | 75 |
| 6 | 600 | 3,1 | 194 | 10,5 | 0,3 | 10,2 | 0,4 | 3,3 | 130 |
| 7 | 740 | 3,0 | 247 | 11,4 | 0,6 | 10,8 | 0,2 | 3,6 | 155 |
| 8 | 570 | 3,1 | 184 | 17,7 | 0,3 | 17,4 | 0,3 | 5,6 | 105 |
| 9 | 630 | 3,0 | 210 | 17,7 | 0,3 | 17,4 | 0,4 | 5,8 | 85 |
| 10 | 600 | 2,8 | 214 | 17,5 | 0,4 | 17,1 | 0,3 | 6,1 | 75 |
| 11 | 570 | 2,8 | 204 | 17,7 | 0,3 | 17,4 | 0,4 | 6,2 | 65 |
| 12 | 600 | 3,1 | 194 | 17,0 | 0,4 | 16,6 | 0,4 | 5,4 | 70 |
| 13 | 630 | 3,0 | 210 | 19,0 | 0,5 | 18,5 | 0,5 | 6,2 | 95 |
| 14 | 540 | 3,3 | 164 | 15,0 | 0,5 | 14,5 | 0,4 | 4,4 | 85 |
| 15 | 570 | 3,0 | 190 | 17,1 | 0,5 | 16,6 | 0,5 | 5,5 | 90 |
| 16 | 570 | 2,8 | 204 | 14,4 | 0,5 | 13,9 | 0,6 | 5,0 | 90 |
| 17 | 570 | 2,9 | 197 | 17,0 | 0,5 | 16,5 | 0,4 | 5,7 | 90 |
| 18 | 570 | 3,3 | 173 | 17,9 | 0,4 | 17,5 | 0,4 | 5,3 | 80 |
| 19 | 570 | 3,3 | 173 | 15,6 | 0,4 | 15,2 | 0,3 | 4,6 | 85 |
| 20 | 520 | 3,3 | 158 | 14,7 | 0,3 | 14,4 | 0,3 | 4,4 | 100 |
| 21 | 570 | 3,7 | 154 | 14,3 | 0,3 | 14 | 0,3 | 3,8 | 110 |
| 22 | 540 | 3,5 | 154 | 15,0 | 0,4 | 14,6 | 0,4 | 4,2 | 80 |
| 23 | 540 | 3,2 | 169 | 12,2 | 0,5 | 11,7 | 0,4 | 3,7 | 80 |
| 24 | 520 | 520 | 173 | 10,9 | 0,4 | 10,5 | 0,3 | 3,5 | 75 |
| 25 | 540 | 2,6 | 208 | 8,5 | 0,6 | 7,9 | 1,7 | 3,0 | 120 |
| 26 | 450 | 3,0 | 150 | 13,6 | 1,9 | 11,7 | 1,5 | 3,9 | 170 |
| 27 | 540 | 2,9 | 186 | 11,8 | 1,5 | 10,3 | 1,4 | 3,6 | 125 |
| 28 | 510 | 2,7 | 189 | 10,7 | 1,3 | 9,4 | 1,2 | 3,5 | 185 |
| 29 | 510 | 2,7 | 189 | 14,4 | 1,0 | 13,4 | 0,9 | 5,0 | 395 |
| 30 | 540 | 3,1 | 174 | 9,1 | 0,8 | 8,3 | 0,7 | 2,7 | 460 |
| 31 | 800 | 2,7 | 296 | 8,3 | 0,6 | 7,7 | 0,6 | 2,9 | 440 |

**Tabelle 2**

| Phosphorbestimmung - Industrielle Abwasserreinigungsanlage | | | | | | | | | |
|---|---|---|---|---|---|---|---|---|---|
| Datum | Belebtschlamm | | | Phosphorkonzentration | | | | | Ablauf |
| 1991 Aug. | SV30 ml/l | TS g/l | Index ml/g | BS mg/l | Filtrat mg/l | Differenz mg/l | Ablauf mg/l | P/TS mg/g | CSB mg/l |
| 1 | 600 | 2,3 | 261 | 6,0 | 0,5 | 5,5 | 0,9 | 2,4 | 465 |
| 2 | 750 | 2,6 | 288 | 7,0 | 4,8 | 2,2 | 0,7 | 0,8 | 480 |
| 3 | 920 | 3,1 | 297 | 8,9 | 0,5 | 8,4 | 0,6 | 2,7 | 340 |
| 4 | 960 | 2,6 | 369 | 7,8 | 0,3 | 7,5 | 0,5 | 2,9 | 340 |
| 5 | 1000 | 2,7 | 370 | 8,3 | 0,5 | 7,8 | 0,6 | 2,9 | 470 |
| 6 | 1320 | 2,8 | 471 | 12,6 | 0,6 | 12,0 | 0,7 | 4,3 | 320 |
| 7 | 1250 | 3,1 | 403 | 13,8 | 0,5 | 13,3 | 0,6 | 4,3 | 275 |
| 8 | 1000 | 2,9 | 345 | 16,1 | 0,8 | 15,3 | 0,7 | 7,8 | 140 |
| 9 | 1000 | 2,6 | 385 | 21,2 | 0,9 | 20,3 | 0,7 | 7,8 | 140 |
| 10 | 920 | 2,9 | 317 | 30,0 | 8,0 | 22,0 | 0,8 | 7,6 | 160 |
| 11 | 920 | 3,8 | 242 | 37,0 | 10,3 | 26,7 | 0,8 | 6,9 | 105 |
| 12 | 800 | 3,0 | 267 | 26,2 | 0,9 | 25,3 | 1,2 | 8,4 | 105 |
| 13 | 720 | 3,1 | 232 | 33,7 | 2,8 | 30,9 | 2,7 | 10,0 | 80 |
| 14 | 800 | 3,1 | 258 | 32,5 | 2,5 | 30,0 | 1,5 | 9,7 | 85 |
| 15 | 760 | 2,9 | 262 | 28,4 | 1,4 | 27,0 | 1,3 | 9,3 | 75 |
| 16 | 640 | 2,6 | 246 | 23,4 | 0,9 | 22,5 | 1,0 | 8,7 | 80 |
| 17 | 720 | 3,0 | 240 | 23,5 | 0,5 | 23,0 | 0,8 | 7,7 | 70 |
| 18 | 880 | 3,7 | 238 | 24,5 | 0,3 | 24,2 | 0,5 | 6,5 | 80 |
| 19 | 840 | 3,1 | 271 | 22,8 | 0,3 | 22,5 | 0,3 | 7,3 | 60 |
| 20 | 720 | 2,5 | 288 | 18,3 | 0,2 | 18,1 | 0,3 | 7,2 | 65 |
| 21 | 720 | 2,7 | 267 | 18,1 | 0,3 | 17,8 | 0,3 | 6,6 | 65 |
| 22 | 600 | 2,6 | 231 | 17,5 | 0,3 | 17,2 | 0,3 | 6,6 | 75 |
| 23 | 600 | 3,6 | 167 | 18,3 | 0,4 | 17,9 | 0,3 | 5,0 | 90 |
| 24 | 520 | 3,0 | 173 | 15,6 | 0,2 | 15,4 | 0,3 | 5,1 | 125 |
| 25 | 440 | 2,4 | 183 | 131,1 | 0,3 | 130,8 | 0,3 | 5,3 | 169 |
| 26 | 480 | 3,1 | 155 | 11,3 | 0,3 | 11,0 | 0,3 | 3,5 | 170 |
| 27 | 480 | 3,1 | 155 | 16,1 | 0,3 | 15,8 | 0,3 | 5,1 | 180 |
| 28 | 420 | 2,8 | 150 | 14,8 | 0,4 | 14,4 | 0,2 | 5,1 | 225 |
| 29 | 440 | 2,8 | 157 | 14,4 | 0,2 | 14,2 | 0,3 | 5,1 | 225 |
| 30 | 480 | 3,2 | 150 | 15,2 | 0,3 | 14,9 | 0,3 | 4,7 | 190 |
| 31 | 520 | 3,3 | 158 | 11,1 | 0,2 | 10,9 | 0,3 | 3,3 | 150 |

**Tabelle 3**

| Phosphorbestimmung - Industrielle Abwasserreinigungsanlage | | | | | | | | | |
|---|---|---|---|---|---|---|---|---|---|
| Datum | Belebtschlamm | | | Phosphorkonzentration | | | | | Ablauf |
| 1991 Sept. | SV30 ml/l | TS g/l | Index ml/g | BS mg/l | Filtrat mg/l | Differenz mg/l | Ablauf mg/l | P/TS mg/g | CSB mg/l |
| 1 | 450 | 2,9 | 155 | 15,2 | 0,2 | 15,0 | 0,3 | 5,2 | 225 |
| 2 | 460 | 3,2 | 144 | 14,5 | 0,2 | 14,3 | 0,3 | 4,5 | 250 |
| 3 | 440 | 3,1 | 142 | 14,0 | 0,3 | 13,7 | 0,3 | 4,4 | 245 |
| 4 | 560 | 3,5 | 160 | 14,2 | 0,2 | 14,0 | 0,4 | 4,0 | 210 |
| 5 | 480 | 3,1 | 155 | 16,3 | 0,3 | 16,0 | 0,4 | 5,2 | 195 |
| 6 | 440 | 3,0 | 147 | 13,6 | 0,4 | 13,2 | 0,4 | 4,4 | 215 |
| 7 | 400 | 3,0 | 133 | 13,2 | 0,3 | 12,9 | 0,3 | 4,3 | 295 |
| 8 | 400 | 2,7 | 148 | 14,0 | 0,3 | 13,7 | 0,3 | 5,1 | 355 |
| 9 | 450 | 2,9 | 155 | 11,3 | 0,4 | 10,9 | 0,1 | 3,8 | 230 |
| 10 | 540 | 3,3 | 164 | 13,2 | 0,2 | 13,0 | 0,2 | 3,9 | 200 |
| 11 | 570 | 3,3 | 173 | 14,2 | 0,3 | 13,9 | 0,3 | 4,2 | 215 |
| 12 | 600 | 2,3 | 261 | 10,3 | 0,4 | 9,9 | 0,4 | 4,3 | 340 |
| 13 | 630 | 2,8 | 225 | 11,7 | 0,5 | 11,2 | 0,6 | 4,0 | 390 |
| 14 | 750 | 3,3 | 227 | 14,8 | 0,3 | 14,5 | 0,9 | 4,4 | 230 |
| 15 | 750 | 3,3 | 227 | 16,9 | 0,3 | 16,6 | 1,2 | 5,0 | 125 |
| 16 | 800 | 3,2 | 250 | 10,7 | 1,4 | 9,3 | 1,2 | 2,9 | 105 |
| 17 | 840 | 2,8 | 300 | 11,4 | 0,9 | 10,5 | 0,7 | 3,8 | 100 |
| 18 | 780 | 3,0 | 260 | 10,7 | 0,9 | 9,8 | 0,6 | 3,3 | 115 |
| 19 | 880 | 2,8 | 314 | 10,9 | 0,6 | 10,3 | 0,5 | 3,7 | 185 |
| 20 | 1000 | 2,9 | 345 | 10,3 | 0,6 | 9,7 | 0,5 | 3,3 | 280 |
| 21 | 960 | 2,6 | 369 | 10,3 | 0,5 | 9,8 | 0,5 | 3,8 | 340 |
| 22 | 1400 | 2,4 | 583 | 9,5 | 0,5 | 9,0 | 0,5 | 3,8 | 305 |
| 23 | 920 | 2,7 | 341 | 10,9 | 0,5 | 10,4 | 0,5 | 3,9 | 245 |
| 24 | 980 | 2,5 | 392 | 13,4 | 0,5 | 12,9 | 0,4 | 5,2 | 185 |
| 25 | 920 | 2,9 | 317 | 15,2 | 0,4 | 14,8 | 0,4 | 5,1 | 103 |
| 26 | 900 | 2,7 | 333 | 16,1 | 0,4 | 15,7 | 0,4 | 5,8 | 111 |
| 27 | 1010 | 2,6 | 388 | 18,3 | 0,4 | 17,9 | 0,4 | 6,9 | 113 |
| 28 | 880 | 3,1 | 284 | 21,4 | 0,4 | 21,0 | 0,3 | 6,8 | 135 |
| 29 | 880 | 3,0 | 293 | 24,1 | 0,3 | 23,8 | 0,3 | 7,9 | 136 |
| 30 | 750 | 3,3 | 227 | 30,6 | 0,3 | 30,3 | 0,4 | 9,2 | 117 |

**Tabelle 4**

| Phosphorbestimmung - Industrielle Abwasserreinigungsanlage | | | | | | | | | |
|---|---|---|---|---|---|---|---|---|---|
| Datum | Belebtschlamm | | | Phosphorkonzentration | | | | | Ablauf |
| 1991 Okt. | SV30 ml/l | TS g/l | Index ml/g | BS mg/l | Filtrat mg/l | Differenz mg/l | Ablauf mg/l | P/TS mg/g | CSB mg/l |
| 1 | 540 | 3,1 | 174 | 28,8 | 0,3 | 28,5 | 0,5 | 9,2 | 155 |
| 2 | 840 | 2,8 | 300 | 28,8 | 0,5 | 28,3 | 0,5 | 10,1 | 100 |
| 3 | 720 | 3,1 | 232 | 16,3 | 0,8 | 15,5 | 0,5 | 5,0 | 100 |
| 4 | 780 | 2,8 | 279 | 24,3 | 0,5 | 23,8 | 0,7 | 8,5 | 95 |
| 5 | 600 | 2,6 | 231 | 27,3 | 0,9 | 26,4 | 0,8 | 10,2 | 105 |
| 6 | 600 | 2,6 | 231 | 26,5 | 0,8 | 25,7 | 0,9 | 9,9 | 102 |
| 7 | 540 | 2,3 | 235 | 26,3 | 1,0 | 25,3 | 0,8 | 11,0 | 95 |
| 8 | 660 | 2,5 | 264 | 30,0 | 0,4 | 29,6 | 0,3 | 11,8 | 81 |
| 9 | 600 | 2,5 | 240 | 26,9 | 0,3 | 26,6 | 0,1 | 10,6 | 72 |
| 10 | 600 | 2,9 | 207 | 28,4 | 0,2 | 28,2 | 0,3 | 9,7 | 62 |
| 11 | 600 | 3,0 | 200 | 28,4 | 0,2 | 28,2 | 0,3 | 9,4 | 69 |
| 12 | 600 | 3,0 | 200 | 31,5 | 0,3 | 31,2 | 0,2 | 10,4 | 61 |
| 13 | 570 | 3,1 | 184 | 30,6 | 0,2 | 30,4 | 0,2 | 9,8 | 65 |
| 14 | 600 | 3,2 | 188 | 33,3 | 0,1 | 33,2 | 0,3 | 10,4 | 60 |
| 15 | 600 | 3,1 | 194 | 30,6 | 0,1 | 30,5 | 0,2 | 9,8 | 67 |
| 16 | 460 | 3,4 | 135 | 28,0 | 0,1 | 27,9 | 0,1 | 8,2 | 75 |
| 17 | 480 | 3,1 | 155 | 25,3 | 0,1 | 25,2 | 0,1 | 8,1 | 75 |
| 18 | 280 | 2,0 | 140 | 17,5 | 0,1 | 17,4 | 0,1 | 8,7 | 110 |
| 19 | 510 | 2,8 | 182 | 18,2 | 0,1 | 18,1 | 0,2 | 6,5 | 130 |
| 20 | 440 | 2,9 | 152 | 19,8 | 0,1 | 19,7 | 0,2 | 6,8 | 80 |
| 21 | 720 | 2,7 | 267 | 23,4 | 0,2 | 23,2 | 0,2 | 8,6 | 85 |
| 22 | 280 | 2,8 | 100 | 24,7 | 0,1 | 24,6 | 0,2 | 8,8 | 65 |
| 23 | 300 | 2,2 | 136 | 22,4 | 0,2 | 22,2 | 0,2 | 10,1 | 70 |
| 24 | 290 | 2,4 | 121 | 20,8 | 0,2 | 20,6 | 0,2 | 8,6 | 69 |
| 25 | 285 | 2,2 | 130 | 26,3 | 0,2 | 26,1 | 0,2 | 11,9 | 70 |
| 26 | 320 | 2,7 | 119 | 26,1 | 0,4 | 25,7 | 0,2 | 9,5 | 60 |
| 27 | 270 | 2,3 | 117 | 23,8 | 0,4 | 23,4 | 0,3 | 10,2 | 64 |
| 28 | 300 | 2,3 | 130 | 22,8 | 0,4 | 22,4 | 0,2 | 9,7 | 45 |
| 29 | 340 | 2,4 | 142 | 22,4 | 0,3 | 22,1 | 0,2 | 9,2 | 60 |
| 30 | 270 | 2,7 | 100 | 28,4 | 0,4 | 28,0 | 0,2 | 10,4 | 50 |
| 31 | 270 | 2,6 | 104 | 28,0 | 0,2 | 27,8 | 0,2 | 10,7 | 55 |

## Patentansprüche

1. Verfahren zur Steuerung einer biologischen Abwasserreinigungsanlage, bei dem man das Abwasser in einem Belebungsbecken in Gegenwart eines Belebtschlammes belüftet und zur Beeinflussung der Eigenschaften des Belebtschlammes Phosphor konzentrationsgesteuert zugibt, **dadurch gekennzeichnet, daß** man zur Steuerung der Phosphorzugabe die Phosphorkonzentration im Belebtschlamm mißt, wobei man die Phosphorkonzentration des Schlamm/Wasser-Gemisches im Belebungsbecken mißt und als Maß für die Phosphorkonzentration des Belebtschlammes verwendet, die Messung der Phosphorkonzentration on-line erfolgt und man die Phosphorzugabe so steuert, daß die Phosphorkonzentration im Belebtschlamm größer oder gleich einer Untergrenze von 4 mg P/g TS und kleiner oder gleich einer Obergrenze von 10 mg P/g TS ist.

2. Verfahren nach Anspruch 1 oder 2, **dadurch gekennzeichnet, daß** die Untergrenze 5 und die Obergrenze 8 mg P/gTS ist.

## Claims

1. A method of controlling a biological wastewater purification plant, in which the wastewater is aerated in an activation tank in the presence of an activated sludge and, to influence the properties of the activated sludge, phosphorus is added under controlled concentration, which comprises measuring the phosphorus concentration in the activated sludge for the control of the phosphorus addition, the phosphorus concentration of the mixed liquor in the activation tank being measured and used as a measure of the phosphorus concentration of the activated sludge and the phosphorus concentration measurement being performed on line, and controlling the phosphorus addition in such a manner that the phosphorus concentration in the activated sludge is greater than or equal to a lower limit of 4 mgP/gDM and is less than or equal to an upper limit of 10 mgP/gDM.

2. The method as claimed in claim 1, wherein the lower limit is 5, and the upper limit is 8 mgP/gDM.

## Revendications

1. Procédé pour la commande d'une installation d'épuration biologique d'eaux usées, dans lequel l'eau usée est aérée dans un bassin à boues activées, en présence d'une boue activée et, pour influer sur les propriétés de la boue activée, on ajoute du phosphore en fonction de la concentration, **caractérisé en ce que**, pour la commande de l'addition de phosphore, on mesure la concentration du phosphore dans la boue activée en mesurant la concentration en phosphore du mélange de boue et d'eau dans le bassin à boues activées et en l'utilisant comme mesure de la concentration en phosphore de la boue activée, on effectue en ligne la mesure de la concentration du phosphore et on règle l'addition de phosphore de manière que la concentration du phosphore dans la boue activée soit supérieure ou égale à une limite inférieure de 4 mg de P/g de matière sèche et inférieure ou égale à une limite supérieure de 10 mg de P/g de matière sèche.

2. Procédé selon la revendication 1 ou 2, **caractérisé en ce que** la limite inférieure est 5 et la limite supérieure est 8 mg de P/g de matière sèche.
